# EUROPEAN PATENT APPLICATION

(11) **EP 2 153 713 A2**
(43) Date of publication of application: **17.02.2010**
(21) Application number: 09167610.6
(22) Date of filing: 11.08.2009
(51) Int. Cl.: A01G 9/02

(54) **Plant receptacle**

(30) Priority: 11.08.2008 DK 200801108
(71) Applicant: Ellegaard, Øjvind, 6700 Esbjerg (DK)
(72) Inventor: Ellegaard, Øjvind, 6700 Esbjerg (DK)
(74) Representative: Tellefsen, Jens J.

(57) **Abstract**

A plant receptacle (32) with at least one opening, the receptacle preferably formed of a fibrous web or sheet material, where the web or sheet material preferably is a nonwoven cotton fibre material, e.g. vlies, with a first structural strength, where the plant receptacle has at least one structural area (35) with a different and greater strength, where this different structural area is formed by wetting, compressing and subsequent drying of a part of the web or sheet material.

## Description

### Field of the Invention

The present invention concerns a plant receptacle with at least one opening and a method for forming at least one structural area on such a plant receptacle, where the plant receptacle is preferably formed of a fibrous web or sheet material. The invention furthermore concerns an apparatus for manufacturing such a plant receptacle.

### Background of the Invention

In connection with transplanting plants that are sprouted, set or transplanted in e.g. a greenhouse, it is known to place the plants in small pots. These pots can be made of plastic, alternatively of paperboard and sphagnum.

By using pots of fibre material, such as paperboard, sphagnum, or combinations thereof, pots can be made that are decomposable in nature, and which therefore in principle can be placed in the earth with the plant in it. This decomposition is, however, so slow that the roots of the plant cannot grow and spread quickly enough. To this is added that pots made of sphagnum or cardboard are relatively expensive to make, both with regard to the material price and the manufacturing processes. Thus there are advantages by the decomposing pots as compared to plastic pots, but the decomposition time or dissolution time of the pots is too long as well as the costs are relatively high.

### Object of the Invention

It is thus the object of the present invention to indicate a solution to the above problem where a plant can be set to sprouting, or be transplanted in a plant receptacle in e.g. a greenhouse for a period prior to final transplanting in the open, and where the plant receptacle is decomposed or dissolved rapidly after transplanting, thus not limiting the roots of the plants, as well as the receptacle being made by a rational process from relatively cheap materials, hereby reducing the total price per receptacle. Since no additional materials, such a adhesives, hardeners or other binders or additives are added, receptacles according to the invention do not entail any contamination or inexpedient influences, but to the contrary provide a lot of advantages to the sprouting plants.

### Description of the Invention

As mentioned in the introduction, the present invention concerns a plant receptacle with at least one opening, and a method for forming a structural area on such a plant receptacle, where the plant receptacle preferably is formed of a fibrous web or sheet material. The invention furthermore concerns an apparatus for manufacturing such a plant receptacle.

In a plant receptacle according to the invention, the web or sheet material is preferably a cotton fibre material, e.g. vlies, with a first structural strength, where the plant receptacle has at least one structural area with a different and greater strength, where this different structural area is formed by wetting, compressing and subsequent drying of a part of the web or sheet material. The material may be produced from cotton only, or, in another preferred variant, be a mixture of preferably cotton and one or more grass species. Among the preferred grasses, bamboo and palm materials are particularly used. The addition of grass to the cotton material in the form of vlies, i.e. not woven but only carded (non-woven), prolongs the decomposition time of the plant receptacle in the earth. By regulating the share of grass in relation to cotton in the web or sheet material, the decomposition time may thus be predetermined with regard to the kind of plant to which the plant receptacle is to be used and to the soil conditions and climatic conditions present at the particular cultivation location.

Wetting can be performed with water, alternatively with a glue or a binder which is non-toxic and decomposable in the nature. The soaked fibres are very soft, and by compressing these structural areas with greater density or at least with increased material thickness can be achieved in comparison with the original web or sheet material. However, it is clear that increased strength does not occur before the fibre material has dried again, and thereby increased stiffness and strength are achieved. Thus it is a process in which fibres in wetted fibre material come into mutual contact by compression and are thereby entangled. The fibres are retained in this position until a part of the supplied liquid is evaporated, e.g. by heat action, and thereafter the treated local area appears with a different and greater strength.

A variant of the plant receptacle according to the invention is where the plant receptacle at least along one edge is provided with one or more structural areas with a different strength, where these areas constitute joints of web or sheet material, e.g. a punctiform joint. By such joints there may e.g. be formed a bag which can be used for sprouting, setting or transplanting therein. The bag is e.g. filled with sphagnum or potting compost, and a potato is set in it. The bag may then be placed in a suitable tray or box and put in a warm and suitable place until the sprouting is well under way, and may subsequently be transplanted in the garden where the bag with the sprouting potato is set directly in the earth. Thus there is no risk that the potato, or whatever is sown or planted in the bag, is damaged as the soil stays around the fragile roots. The bag, which is made of a decomposable fibrous web or sheet material, will disappear in a relatively short time, and when the transplanted plants are harvested, the bag will be decomposed. Therefore, it is not necessary to collect remains of these plant receptacles in the earth in the garden before the next transplanting.

Another variant of the plant receptacle according to the invention is where the plant receptacle is provided with one or more structural areas with a different strength, where these areas constitute a reinforcing collar or rib of compressed web or sheet material. This may e.g. be an upper edge of a pot as known from the traditional pots of plastic or cardboard. It may also be that longitudinal or transverse reinforcing ribs are made on a plant receptacle. A plant receptacle can, for example, be made tubular where the side is closed with punctiform joints, where the bottom is constituted by an area with increased strength and where there are an upper reinforcing collar on the receptacle, rings extending around the receptacle as well as longitudinal reinforcing ribs on the side. Such a plant receptacle has the advantage that it is very stable in shape which can be advantageous during the work with sowing, setting or planting. Obviously, many other combinations may be envisaged.

Such plant receptacles may advantageously be made of a web or sheet material of a water-soluble vlies, e.g. of cotton fibres. It is thus a natural material which is relatively easily decomposed by the moisture in the earth without negative consequences, and which at the same time is cheap and has the desired properties.

Such vlies materials can be made with different thicknesses and densities, and these may be selected according to need and according to the conditions for which the plant receptacles are intended.

In a further preferred embodiment of the receptacle, the plant receptacle is provided with an opening at the top, and along a bottom edge arranged with a structural area constituting a bottom, and where one or more structural areas are provided from the bottom edge to the top edge.

In some applications, with regard to root formation, watering, fertilising etc., it may be desirable that there is no bottom in the receptacle. If the receptacle is conical and at least partially filled with soil, sphagnum or other growth medium, the conical shape of the receptacle will retain the plant such that the bottom is not necessary.

Precisely for this type of applications, there is a further preferred embodiment wherein a second plant receptacle is arranged within a first plant receptacle, the second receptacle having dimensions which are larger than those of the first receptacle, possibly except the distance from the bottom edge to the top edge, and where excess material from the second receptacle is folded and treated such that structural zones are formed in parallel with the structural zones of the first receptacle; and where the folded structural zones may optionally be superposed and integrated with the structural zones of the first receptacle; and where the top edge with at least double material layer thickness may optionally be bent and treated such that structural area is also formed here.

Hereby is achieved a plant receptacle which has required strength for hanging, i.e. not needing to stand on a base. By industrial production of plants, in particular very early plants, the plant receptacles with seeds, sprouts, cuttings and other are suspended such that only the lowermost part of the receptacle is in contact with water. By suspending the receptacles, these may via conveyor chains or other be automatically transported through the greenhouses without manual treatment, entailing a great saving.

A plant receptacle according to the invention may advantageously be produced by an apparatus that forms at least one structural area on a plant receptacle, where the plant receptacle is formed of a fibrous material, preferably a web or sheet material.

Such an apparatus may include at least one pressing tool with two parts, namely a first part - preferably with a cutout - and a second part - preferably with a projection corresponding to the first part - between which the fibrous material is placed and pressed. It may thus be a depression in which the fibre material is pressed down by a mandrel. Hereby, the fibre material is contracted, and the mandrel ensures that the fibres in the depressions will cohere, i.e. become entangled such that a relatively strong joint between the two layers in this zone arises. In order that this process can occur with the desired result, it is necessary that the fibre material is wetted, which may be effected in the said apparatus as the pressing tool may be with at least one integrated channel for supplying liquid to the fibrous material. The supplied liquid may be heated water which is either supplied from an external water heater or which alternatively is heated on its way through the integrated channel.

An apparatus according to the invention may furthermore include a tool with integrated heating element. This heating element has the purpose of evaporating the supplied liquid to such a degree that the fibre material again attains sufficient strength in order for the plant receptacle to be handled in the subsequent process. This evaporation of liquid may also occur under use of a heat blower arranged in connection with the tool or in immediate vicinity thereof.

The apparatus may be adapted such that the second part of the tool is provided with projections as well as a spring-loaded ejector. By such an ejector, the projection and the fibrous material can be separated without tearing the wet and thereby rather weak fibre material. The ejector moreover has the function that it retains the fibrous layer or layers in position immediately before compressing as the ejector will get in contact with the fibre material before the pressing itself.

Another embodiment of the apparatus is adapted such that the pressing tool is made up of two pressing wheels arranged on separate shafts, where the wheels are provided along the periphery with a number of grooves such that the structural area is formed by the material passes between the two wheels that are pressed together, whereby the grooves exert an appropriate pressure such that the fibres in the two material layers are entangled.

The grooves which may be freely oriented relative to the periphery of the wheel will, when two material layers pass through the opposed wheels, compress the material arranged between the wheels. The fibres are hereby entangled in the areas that are subjected to the pressure of the grooves. A rational and rapid production may be provided by using more wheel sets.

In a preferred embodiment of the plant receptacle, it has shape as a frustum of a cone with compressed bottom and largely circular or oval upper opening. Along two edges in the frustum of a cone there are structural areas connecting two layers of material, whereby the receptacle is provided its shape and structure. The extension of the bottom will typically be substantially less than that of the opening. In use is hereby achieved that roots penetrating through the material are not entangled with roots from an adjacent plant as the upper edges keep a certain distance between the plants.

The above described principle of forming structural zones is thus based on choosing a fibre material as e.g. cotton, which by wetting/moisturising allows the individual fibres to be manipulated. The manipulation occurs by two or more layers of material being pressed together, whereby fibres in different layers are entangled.

By wetting, the material looses its integrity and thereby its mechanical strength. It is therefore important that the material in this condition is not subjected to inadvertent actions. After compression, the humidity in the structural area has to be reduced in order to achieve the required mechanical strength. Typically, it is necessary to remove 20 - 50% of the water compared with saturated condition in order to ensure mechanical stability. This is done most rationally by heating the structural areas locally for a short period of time. By embodiments in which other fibre types form a part, as previously mentioned, these fibres are of course also to be softened such that the wanted workability is achieved.

### Description of the Drawing

The invention is described in the following with reference to the drawing, wherein:
- Fig. 1: shows a bag-shaped variant of a plant receptacle;
- Fig. 2: shows another bag-shaped variant of a plant receptacle;
- Fig. 3: shows a pot-shaped plant receptacle;
- Fig. 4: shows schematically a pressing tool;
- Fig. 5: shows schematically the process wherein two layers of material is joined to a number of receptacles;
- Fig. 6: illustrates a number of separate receptacles;
- Fig. 7: shows schematically a detail of a pressing tool; and
- Fig. 8: shows schematically an embodiment of a receptacle in an alternative design.

### Detailed Description of the Invention

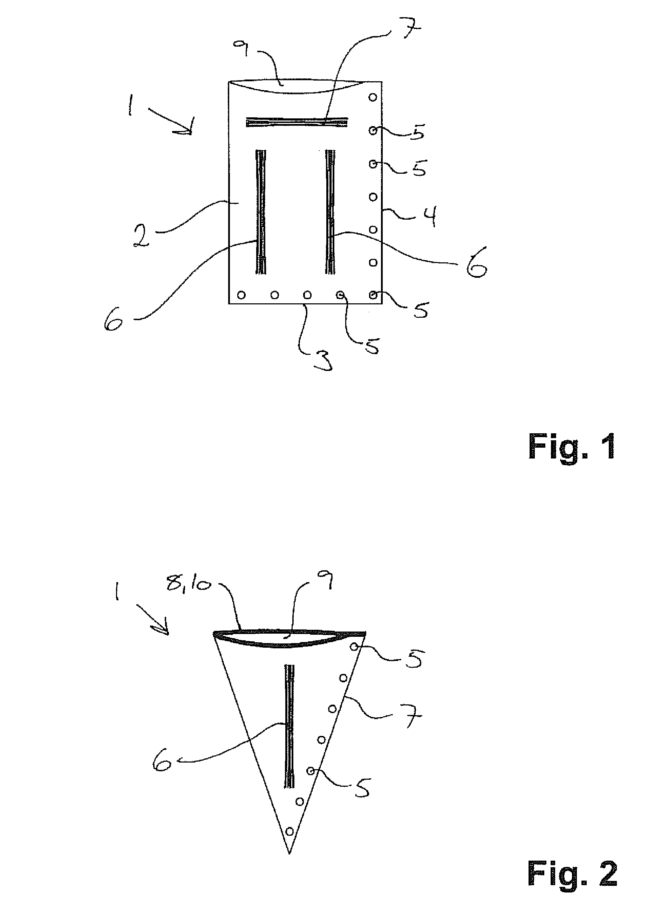

In Fig. 1 is seen a plant receptacle 1 according to the invention which is made as a bag of a web or sheet material 2 of a fibrous material, e.g. vlies of cotton. The plant receptacle 1 is made by folding the fibre material and along a bottom edge 3 and a side edge 4 joints 5 are made by compressing wetted fibres in minor, local areas. In principle, this is a series of punctiform joints 5. On the surfaces of the plant receptacle, reinforcing longitudinal ribs 6 and transverse ribs 7 are made. The joint along the edges 3 and 4 could also be made as elongated compressions corresponding to the ribs 6 and 7.

In Fig. 2 is further seen a variant of a plant receptacle 1 which is shown here with triangular shape. Thus joints 5 are only made along one edge 7. On this variant, there are also produced longitudinal reinforcing ribs 6. Moreover, at the upper edge 8, at the opening 9 for the plant receptacle 1, there is provided a stiffening and shaping edge 10 where the fibre material is compressed, thereby appearing with a different and higher strength than the initial strength.

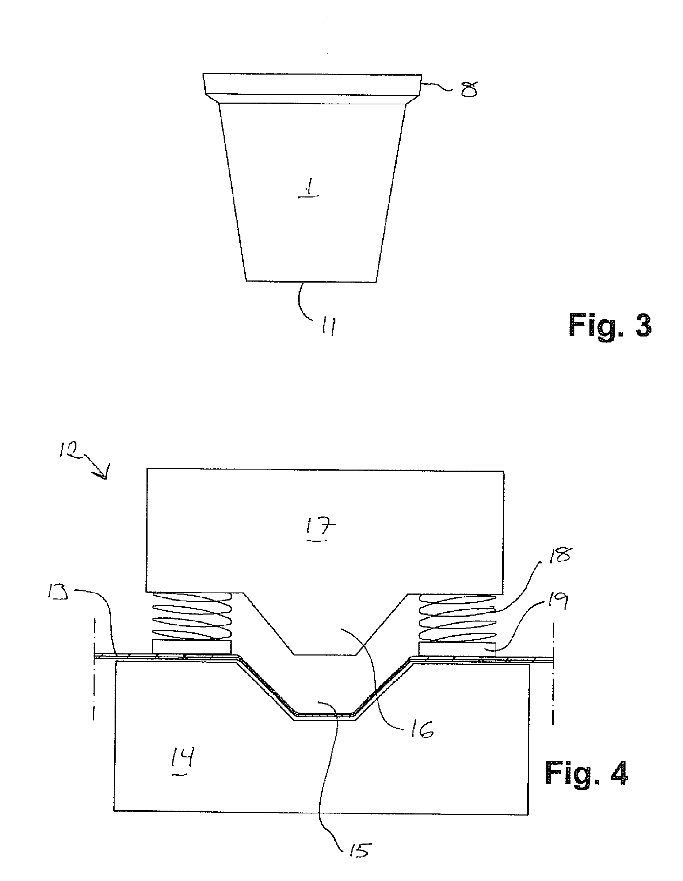

In Fig. 3 is seen a variant of a plant receptacle 1 which is shown here with the same shape as a classical pot. At the upper edge 8 there is made a compression of the fibre material which thus appears as a collar with increased strength due to higher density/thickness, but also because the collar is made with an angular and thereby reinforcing design. Such a pot may furthermore be with ribs as shown in Figs. 1 and 2, and may possibly be with an area at the bottom 11 which is also reinforced.

In Fig. 4 appears an example of an apparatus 12 for performing a compression of the fibre material 13. The shown apparatus 12 is depicted very schematically and may of course have innumerable other designs. At the bottom is seen a tool part 14 with a depression 15 into which a corresponding projection 16 on the upper tool part 17 fits. The tool 14, 17 is furthermore provided with an ejector 18, 19 that consists of a spring 18 and a thrust plate 19. This thrust plate 19 is arranged such that it bears on the fibre material 13 before the projection 16 comes into contact with it. When the tool 14, 17 is pressed together, the springs 18 are also pressed together and the fibre material is fixed. The spring force is adjusted such that the desired pressure is attained, and therefore it may very well be so that the fibre material can be drawn with down into the depression 15 by the projection 16, irrespective of the ejector 18, 19 pressing on it. Also, the ejector 18, 19 ensures that the fibre material 13 during opening of the apparatus 12 is not caught on the projection 16 when the latter is retracted. The shown variant of the apparatus 12 may be intended for punctiform joints 5 as shown in Figs. 1 and 2, or for elongated ribs 6 and 7, or for edges 8, 10. The tools may thus be elongated, punctiform or even designed as two rolling tools, where the joining is effected continuously along e.g. an edge 3, 4, 7. The apparatus 12 may also be with not shown channels for supplying water or glue, and furthermore there may be integrated one or more not shown heating elements in one or more of the tool parts 14, 17.

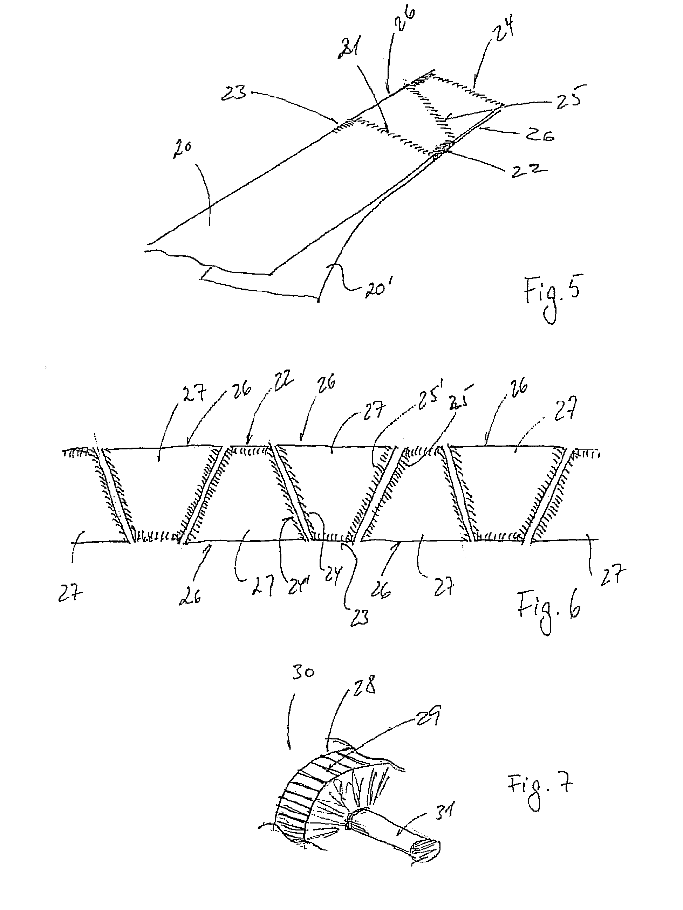

In Fig. 5 are illustrated schematically different phases in a production method. Two webs of material 20, 20' are laid upon each other and continued in the apparatus (not shown). By means of a number of pressing wheels 30, as illustrated in fig. 7, the structural zones 21 are formed.

Experiments have shown that by using non-woven cotton material (about 40 gr/m²) which is wetted/wet, it is possible by compressing only to have the individual fibres in the material tangle with the other fibres, whereby a structural zone is formed with a double number of fibres per area unit, and with a blurred dividing line between the two material layers that were together. It is this principle which is used in the present invention for forming the structural zones. Hereby, glue or mechanical means are avoided for forming the receptacles. By plastic materials is often used welding for joining two sheets of material, but this is of course not possible with a natural fibre material as the one used in the present invention. The structural zone may in many ways be compared with a welding, as it is not possible to separate the layers without tearing as well as it is not possible to detect where the individual layers are disposed when the individual fibres are pressed in the structural zone.

The shown example in Fig. 5 is thus made by means of four sets of wheel pairs: Two wheel pair sets for forming opposing structural bottom zones 22, 23 and two wheel pair sets for forming the longitudinal sides 24, 25. In this example, the sides 24, 25 are angled so that the bottom 22, 23 of the receptacles has less extension than the top (opening) 26.

Alternatively, one pair of wheels can be used, an upper and a lower wheel, respectively. The surface of the wheels are provided with grooves corresponding to the indicated structural zones such that structural zones as illustrated are continuously formed by rotating the wheels with layers of material there between.

In Fig. 6 is illustrated how the individual receptacles 27 are cut free by cutting in the structural zones such that each receptacle 27 is limited by half a structural zone 24, 25, 24', 25'.

In Fig. 7, a pressing wheel 30 that may form part of the above mentioned wheel pairs is shown schematically. The periphery 28 of the wheel 30 is provided with a number of grooves 29. When a wheel pair of identical wheels are rotated against each other around shafts - here only one shaft 31 shown -, material located between the wheels will be compressed opposite the wheels 29, whereby the structural zones are formed. In the shown example, the grooves 29 are shown largely in parallel with the shaft 31, but the grooves 29 may be oriented at any angle relative to the shaft.

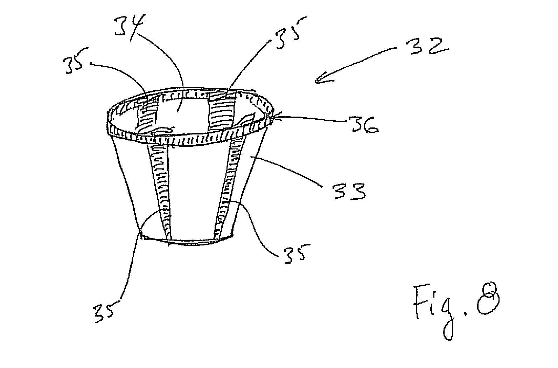

In Fig. 8 is illustrated a yet a design variant of a receptacle according to the invention. In the shown example, the receptacle 32 is constructed by putting two different sizes of receptacles 33, 34 within each other. The receptacle 34 is thus larger than the outer receptacle 33. Hereby, excess material appears. This material is bent such that at some points, four shown here, overlap zones 35 are formed. These overlap zones 35 are pressed together whereby structural zones are formed.

Similarly, the upper edge may be bent whereby an annular structural zone 36 appears.

The receptacle is here illustrated without a bottom, but it may of course be provided with a bottom.

The receptacle can be made in that the internal receptacle is placed inside the outer receptacle by means of a conical tool, and that on the cone or on an outer mould in which the outer receptacle is arranged there are provided pressing zones, i.e. zones corresponding to the overlaps 35, where a great pressure is exerted between the material layers such that the structural zones 35, 36 are formed.

## Claims

1. A plant receptacle with at least one opening, the receptacle preferably formed of a fibrous web or sheet material, **characterised in that** the web or sheet material preferably is a non-woven cotton fibre material, e.g. vlies, with a first structural strength, that the plant receptacle has at least one structural area with a different and greater strength, where this different structural area is formed by wetting, compressing and subsequent drying of a part of the web or sheet material.

2. Plant receptacle according to claim 1, wherein the plant receptacle at least along one edge is provided with one or more structural areas with a different strength, where these areas constitute joints of web or sheet material, e.g. a punctiform joint.

3. Plant receptacle according to claim 1, wherein the plant receptacle is at least provided with one or more structural areas with a different strength, where these areas constitute a reinforcing collar or rib of compressed web or sheet material.

4. Plant receptacle according to any of claims 1-3, wherein the web or sheet material of which the plant receptacle is formed is a water-soluble vlies, e.g. of cotton fibres.

5. Plant receptacle according to any of claims 1-4, wherein the plant receptacle is provided with an opening at the top, and along a bottom edge arranged with a structural area constituting a bottom, and where one or more structural areas are provided from the bottom edge to the top edge.

6. Plant receptacle according to claim 5, wherein a second plant receptacle is arranged within a first plant receptacle, the second receptacle having dimensions which are larger than those of the first receptacle, possibly except the distance from the bottom edge to the top edge, and where excess material from the second receptacle is folded and treated such that structural zones are formed in parallel with the structural zones of the first receptacle; and where the folded structural zones may optionally be superposed and integrated with the structural zones of the first receptacle; and where the top edge with at least double material layer thickness may optionally be bent and treated such that structural area is also formed here.

7. A method for forming a structural area on a plant receptacle, wherein the plant receptacle is formed of a non-woven fibrous material, preferably a web or sheet material, where the structural area is formed by wetting, compressing and subsequent drying of the fibrous material.

8. Method according to claim 7, wherein two webs or sheets of the non-woven material are arranged upon each other, and the material in the least of the structural areas is soaked, after which the material layers in the structural areas are pressed together in wet condition whereby the fibres in the two layers become entangled, after which the structural areas either actively or passively are dried, and where the individual plant receptacles are separated immediately after compressing, or after drying, or immediately before use.

9. An apparatus for making a plant receptacle with at least one opening and for performing a method for forming a structural area on a plant receptacle, where the plant receptacle is formed of a fibrous material, preferably a web or sheet material, **characterised in that** the apparatus includes at least one pressing tool with two parts between which the fibrous material is placed and pressed.

10. Apparatus according to claim 9, wherein the tool is provided with at least one integrated channel for supplying liquid to the fibrous material and/or wherein the tool is provided with an integrated heating element.

11. Apparatus according to claim 9 or 10, wherein the pressing tool is made up of two pressing wheels arranged on separate shafts, where the wheels are provided along the periphery with a number of grooves or projecting points such that the structural area is formed by the material passing between the two wheels which are pressed together, whereby the grooves, alternatively the projecting points, exert an appropriate pressure such that the fibres in the two material layers are entangled.

12. Plant receptacle according to claim 4, wherein the web or sheet material of which the plant receptacle is formed is a water-soluble vlies based on cotton fibres with the addition of plant fibres from a grass species, such as bamboo or palm.
